# EUROPÄISCHE PATENTSCHRIFT

(11) **EP 1 338 602 B1**
(45) Veröffentlichungstag und Bekanntmachung des Hinweises auf die Patenterteilung: **12.01.2005**
(21) Anmeldenummer: 03003116.5
(22) Anmeldetag: 13.02.2003
(51) Int. Cl.: C07F 9/40

(54) **Verfahren zur Herstellung von Dimethylpropanphosphonat**
Process for the preparation of dimethyl propanephosphonate
Procédé de préparation du diméthyl propanephosphonate

(30) Priorität: 26.02.2002 DE 10208255
(43) Veröffentlichungstag der Anmeldung: 27.08.2003
(73) Patentinhaber: Bayer Chemicals AG, 51368 Leverkusen (DE)
(72) Erfinder: Hansel, J.-G., Dr., 50670 Köln (DE); Jabs, G., Dr., 51519 Odenthal (DE); Kaulen, J., Dr., 51519 Odenthal (DE); Adams, H.-G., Dr., 51371 Leverkusen (DE); Fröhlen, H.G., 51381 Leverkusen (DE)

(56) Entgegenhaltungen:
- DE-A- 2 043 520
- DE-A- 2 535 658
- US-A- 2 478 390
- US-A- 4 003 720

## Beschreibung

Die Erfindung betrifft ein Verfahren zur Herstellung von Dimethylpropanphosphonat, dadurch gekennzeichnet, dass Dimethylphosphit mit Propen in Gegenwart eines Radikalbildners bei einer Reaktionstemperatur von 60 bis 95°C, wobei die Halbwertszeit des Radikalbildners bei der Reaktionstemperatur 0,1 bis 20 min. beträgt, miteinander umgesetzt werden.

Alkanphosphonsäuredialkylester haben ein breites Anwendungsspektrum, sie dienen beispielsweise in Kunststoffen als nichtreaktive Flammschutzmittel und Weichmacher, sie werden als Hilfsmittel in Textilien und Papier eingesetzt. Weiterhin finden sie in der chemischen Industrie Anwendung als Intermediate, Extraktionsmittel für Metalle sowie als Additive für Schmiermittel. Dimethylpropanphosphonat im Besonderen stellt laut DE-A-4418307 ein gutes Flammschutzmittel für Polyurethan-Kunststoffe dar.

Es ist eine Vielzahl von Verfahren zur Herstellung von Alkanphosphonsäuredialkylestern bekannt. Wegen ihrer Wirtschaftlichkeit wird die radikalische Addition von Dialkylphosphiten an Olefine vielfach angewendet (Houben-Weyl, Methoden der Organischen Chemie 4. Auflage, Band XII/1, Stuttgart 1964, S. 463- 467; Band E2, Stuttgart 1982, S. 351-353).

Eine besondere technische Ausführung dieses Herstellverfahrens in Hinblick auf die Herstellung von Dimethylpropanphosphonat ist in DE-A-2 043 520 beschrieben. Das Verfahren nach DE-A-2 043 520 erlaubt die Herstellung von Ethan- und Propanphosphonsäureestem in Ausbeuten von über 95 %, ohne dass dabei Telomere gebildet werden. Nach DE-A-2 043 520 muss die Umsetzung von Dialkylphosphiten mit Ethylen oder Propylen bei 130 bis 250°C in Gegenwart von Radikalbildnem so durchgeführt werden, dass das gasförmige Olefin in dem Maße zu dem vorgelegten Dialkylphosphit dosiert wird, wie es abreagiert.

Die Eingangs erwähnte DE-A-1 963 014 beschreibt erforderliche Temperaturen von 150 bis 195°C bei der Umsetzung von Dialkylphosphiten mit Olefinen, wobei in diesem Temperaturbereich alle bekannten Radikalbildner für die Reaktion geeignet sein sollten.

Ein Nachteil bei der Anwendung der oben beschriebenen Verfahren auf die Synthese von Dimethylpropanphosphonat ist, dass bei der Synthese neben Dimethylpropanphosphonat auch 0,1 bis 1,0 Gew.-% Trimethylphosphat gebildet wird. Trimethylphosphat zählt zu den Arbeitsstoffen mit Verdacht auf krebserzeugende Wirkung (Deutsche Forschungsgemeinschaft, "Maximale Arbeitsplatzkonzentrationen und Biologische Arbeitsstofftoleranzwerte - Mitteilung 37", Wiley-VCH, Weinheim 2001, S. 110). In den Ländern der Europäischen Union müssen Zubereitungen, die einen krebserzeugenden Stoff in Mengen größer oder gleich 0,1 % enthalten, entsprechend gekennzeichnet werden (Richtlinie 1999/45/EG, Anhang II, Kap. 6 (vormals 88/379/EWG), in deutsches Recht umgesetzt durch die GefStoffV). Diese Kennzeichnungspflicht stellt einen erheblichen Wettbewerbsnachteil dar. Trimethylphosphat ist daher ein unerwünschtes Nebenprodukt.

Dass die Senkung der Temperatur nicht notwendigerweise zu einer hohen Ausbeute an Alkanphosphonsäuredialkylester führt, geht aus US-A-2 478 390 und US-A-4 003 720 hervor, wobei bei der radikalischen Addition von Dialkylphosphiten an Olefine bei Temperaturen von 60 bis 150°C überwiegend Telomere gebildet werden. Diese Telomere sind für eine Anwendung als Flammschutzmittel ungeeignet. Zum Beispiel ergibt laut US-A-2 478 390 Diethylphosphit mit Ethylen bei 80 - 115°C nur 42 % Diethylethanphosphonat, während der Rest des Reaktionsproduktes aus höhersiedenden Telomeren besteht.

Der Erfindung lag die Aufgabe zugrunde, ein weiteres, vorzugsweise verbessertes Verfahren zur Herstellung von Dimethylpropanphosphonat bereitzustellen. Die Aufgabe wird dadurch erschwert, dass die Siedepunkte von Trimethylphosphat und Dimethylpropanphosphonat nur etwa 2°C auseinander liegen, so dass eine destillative Trennung der beiden Stoffe nur mit erheblichem Aufwand zu erreichen ist.

Die Erfindung betrifft ein Verfahren zur Herstellung von Dimethylpropanphosphonat, dadurch gekennzeichnet, dass Dimethylphosphit mit Propen in Gegenwart eines Radikalbildners bei einer Reaktionstemperatur von 60 bis 95°C, wobei die Halbwertszeit des Radikalbildners bei der Reaktionstemperatur 0,1 bis 20 min. beträgt, miteinander umgesetzt werden.

Nach dem erfindungsgemäßen Verfahren ist es bspw. möglich, eine Ausbeute von mehr als 95 % Dimethylpropanphosphonat zu erhalten und insbesondere gleichzeitig die Bildung von Trimethylphosphat in Mengen über 0,1 Gew.-% und größerer Mengen von Telomeren zu vermeiden.

Die Reaktionstemperatur der Umsetzung nach dem erfindungsgemäßen Verfahren ist bevorzugt 70 bis 95°C, ganz besonders bevorzugt 80 bis 95°C.

Bevorzugte Radikalbildner sind jene, deren Halbwertszeit bei der Reaktionstemperatur im Bereich von 0,5 bis 10 min. liegen. Die Halbwertszeiten von kommerziell verfügbaren Radikalbildnern sind bekannt. Sie lassen sich zum Beispiel in bekannter Weise mittels der Arrhenius-Gleichung aus den ebenfalls bekannten Aktivierungsparametern berechnen oder nach bekannten Methoden experimentell ermitteln (J. Sanchez, T. N. Myers in The Polymeric Materials Encyclopedia, Ed. J. C. Salamone, CRC Press, Boca Raton 1996).

Der Radikalbildner wird vorzugsweise in substöchiometrischen Mengen von 0,1 bis 5 Mol-%, insbesondere 0,3 bis 2 Mol-%, bezogen auf Propen eingesetzt. Der Radikalbildner sollte in gleicher Weise zu der Reaktionsmischung dosiert werden, wie das Propen, so dass die relativen Mengen an eingetragene Radikalbildner und Propen über die gesamte Dauer der Propendosierung konstant bleiben. Der Radikalbildner wird im Allgemeinen in Substanz, als Lösung in einem Lösungsmittel oder als Lösung in einem Teil des zur Reaktion benötigten Dimethylphosphits zudosiert.

Als Radikalbildner werden bevorzugt organische Peroxide eingesetzt. AzoVerbindungen und andere bekannte radikalbildende Substanzen sind auch geeignet.

### Zu den bevorzugten Radikalbildnern gehören:

Peroxycarbonsäurealkylester (wie zum Beispiel Cumylperoxyneodecanoat, 1,1,3,3-Tetramethylbutylperoxyneodecanoat, tert.-Amylperoxyneodecanoat, tert.-Butylperoxyneodecanoat, 1,1,3,3-Tetramethylbutylperoxypivalat, tert.-Butylperoxyneoheptanoat, tert.-Amylperoxypivalat oder tert.-Butylperoxypivalat),

Diacylperoxide (wie zum Beispiel Diisobutyrylperoxid, Di-(3,5,5-trimethylhexanoyl)-peroxid, Dilauroylperoxid oder Didecanoylperoxid) und

Dialkylperoxydicarbonate (wie zum Beispiel Di-(4-tert.-butylcyclohexyl)-peroxydicarbonat, Di(2-ethylhexyl)-dicarbonat, Dibutylperoxydicarbonat, Dicetylperoxydicarbonat oder Dimyristylperoxydicarbonat).

Ganz besonders bevorzugt sind tert.-Butylperoxyneodecanoat oder Dilauroylperoxid.

Das molare Verhältnis von Dimethylphosphit zu Propen beträgt vorzugsweise 1,0:1,0 bis 3,0:1,0, insbesondere 1,1:1,0 bis 2,3:1,0. Das Dimethylphosphit kann in Substanz oder durch ein inertes Lösungsmittel verdünnt eingesetzt werden. Als Lösungsmittel kommen bspw. in Frage Dioxan, Toluol oder Isododecan. Vorzugsweise wird es jedoch unverdünnt eingesetzt.

Die im erfindungsgemäßen Verfahren eingesetzten Ausgangsstoffe Dimethylphosphit und Propen werden vorzugsweise technisch rein eingesetzt. Besonders bevorzugt werden möglichst reine Produkte eingesetzt, da hierbei die höchsten Umsatzraten, beste Ausbeuten und niedrigsten Trimethylphosphatgehalte erzielt werden können. Ganz besonders bevorzugt wird Dimethylphosphit mit einem sehr geringen Trimethylphosphatgehalt eingesetzt, vorzugsweise mit 0 bis 0,1 Gew.-% Trimethylphosphat, besonders bevorzugt mit 0 bis 0,01 Gew.-% Trimethylphosphat.

Die Umsetzung nach dem erfindungsgemäßen Verfahren kann bspw. unter vermindertem oder unter erhöhtem Druck durchgeführt werden. Vorzugsweise wird bei einem Druck von 150 bis 6.000 mbar (abs.), besonders bevorzugt bei einem Druck von 300 bis 2.000 mbar (abs.), ganz besonders bevorzugt bei 500 bis 950 mbar (abs.) gearbeitet.

Die Umsetzung des erfindungsgemäßen Verfahrens kann in kontinuierlicher oder diskontinuierlicher Weise erfolgen. Bei kontinuierlicher Arbeitsweise werden als Reaktionsgefäße vorzugsweise Rohrreaktoren, Reaktionsschleifen, Reaktionskolonnen oder Reaktionskaskaden eingesetzt. Bei diskontinuierlicher Arbeitsweise werden als Reaktionsgefäße vorzugsweise übliche, dem Fachmann bekannte Reaktionsgefäße, die für die genannten Reaktionsbedingungen geeignet sind, verwendet. Diese sind vorzugsweise mit einer Außenkühlung versehen. Weiterhin sind diese vorzugsweise mit einer Rühreinrichtung versehen.

Zur Durchführung des erfindungsgemäßen Verfahrens wird vorzugsweise das Dimethylphosphit vorgelegt und auf die Reaktionstemperatur erwärmt. Dann werden der Radikalbildner und das Propen gleichzeitig zudosiert. Die Dauer der Dosierung von Propen und Radikalbildner kann in weiten Bereichen frei gewählt werden. Sie kann beispielsweise zwischen 1 Stunde und 30 Stunden liegen. Jedoch sollte das Propen nicht schneller dosiert werden, als es durch die Reaktion verbraucht wird und so, dass der bevorzugte Druckbereich eingehalten wird. Nach Ende der Dosierung kann die Reaktionsmischung zur Vervollständigung der Reaktion noch weiter bei der Reaktionstemperatur getempert werden. Es ist besonders bevorzugt, Fremdgase vor, aber auch, wenn mit dem Propen Fremdgase eingetragen werden, während der Propendosierung zu entfernen. Die Fremdgasentfemung kann beispielsweise durch Evakuierung des Dimethylphosphits und/oder der Reaktionsmischung und/oder durch teilweise Ausschleusung der Gasphase taktweise oder kontinuierlich geschehen. Die Propenzufuhr kann auf oder unter der Oberfläche der Reaktionsmischung erfolgen.

Die Aufarbeitung der Syntheselösung kann in üblicher Weise durch Destillation erfolgen, die bevorzugt bei vermindertem Druck durchgeführt wird. Wenn ein Überschuss an Dimethylphosphit eingesetzt wird, kann dieser in der Destillation zurückgewonnen und erneut in die Reaktion eingesetzt werden.

Das erfindungsgemäße Verfahren lässt sich in vorteilhafter Weise technisch einfach realisieren und führt darüber hinaus im Allgemeinen zu Dimethylpropanphosphonat in Ausbeuten von über 95 % und mit einem Trimethylphosphatgehalt von unter 0,1 %. Die hohen Ausbeuten sind unerwartet, da der Stand der Technik bei niedrigeren Reaktionstemperaturen einen erheblichen Anteil an Telomeren erwarten ließ. Der niedrige Trimethylphosphatgehalt stellt einen erheblichen technischen und auch wirtschaftlichen Fortschritt dar, da er die kennzeichnungslose Vermarktung des Dimethylpropanphosphonats ermöglicht.

Die nachfolgenden Beispiele erläutern das erfindungsgemäße Verfahren, ohne dieses zu beschränken. Die Reaktionsmischungen wurden nach bekannten Verfahren der Gaschromatographie analysiert, alle %-Angaben bedeuten Gewichts-%. Vom Produkt Dimethylpropanphosphonat wird nur die Summe der beiden sich bildenden Isomeren angegeben.

### Beispiele

### Beispiel 1

Ein 2-1-Planschliff-Glasreaktor mit hochwirksamen Rührer, Rückflusskühler, Thermometer, Dosierpumpe, Vakuumpumpe, Manometer, Gaszuleitung verbunden über Rückschlagventil und Nadelventil mit einer auf einer Waage befindlichen Propengasflasche wird evakuiert und mit trockenem Stickstoff belüftet. 500 g Dimethylphosphit werden unter Stickstoff als Vorlage eingefüllt und unter leichtem Rühren und Stickstoffüberlagerung auf 90°C aufgeheizt. Nach Erreichen von 90°C wird die Anlage verschlossen und bei maximaler Rührerdrehzahl ein Vakuum von 150 mbar angelegt.

Danach wird Propen eingeleitet und die Dosierung einer Lösung von 105 g Dimethylphosphit und 9,1 g einer 75 %igen Lösung von tert.-Butylperoxyneodecanoat in Isododekan per Dosierpumpe gestartet, wodurch sich der Druck von 150 mbar auf 950 mbar erhöht. Die Propendosierung wird so reguliert, dass der Druck zwischen 500 und 950 mbar gehalten wird. Die Reaktion ist exotherm und die Innentemperatur wird durch Anpassen der Heizung auf 90°C eingeregelt. Nach 1,5 Stunden sind 102,5 g Propen eindosiert und die Dosierung von Propen und Starterlösung wird gestoppt. Es wird 1 Stunde bei 90°C nachgetempert. Danach wird der Ansatz auf Raumtemperatur gebracht und die Anlage mit Stickstoff belüftet.

Auswaage 664,2 g Rohprodukt, Zusammensetzung laut Gaschromatographie: 43,84 % Dimethylphosphit, 0,037 % Trimethylphosphat, 54,86 % Dimethylpropanphosphonat entsprechend 98,3 % Ausbeute.

### Beispiel 2

Versuchsdurchführung wie in Beispiel 1, jedoch unter Einsatz einer Lösung aus 112,3 g Dimethylphosphit und 4,8 g einer 75 %igen Lösung von tert.-Butylperoxyneodecanoat in Isododekan als Radikalbildner.

Auswaage 640,3 g Rohprodukt, Zusammensetzung laut Gaschromatographie: 42,78 % Dimethylphosphit, 0,034 % Trimethylphosphat, 56,09 % Dimethylpropanphosphonat entsprechend 96,8 % Ausbeute.

### Beispiel 3

Versuchsdurchführung wie in Beispiel 1, jedoch mit einer Vorlage von 605 g Dimethylphosphit und unter Einsatz einer Lösung aus 88,4 g 1,4-Dioxan und 7,8 g Dilauroylperoxid als Radikalbildner.

Auswaage 785,7 g Rohprodukt, Zusammensetzung laut Gaschromatographie: 52,91 % Dimethylphosphit, 0,032 % Trimethylphosphat, 46,07 % Dimethylpropanphosphonat entsprechend 97,6 % Ausbeute.

### Vergleichsbeispiel 1

In einer Dimethylpropanphosphonat-Synthese gemäß DE-A-2,043,520, Beispiel 1, bilden sich 0,6 Gew.-% Trimethylphosphat.

## Patentansprüche

1. Verfahren zur Herstellung von Dimethylpropanphosphonat, **dadurch gekennzeichnet, dass** Dimethylphosphit mit Propen in Gegenwart eines Radikalbildners bei einer Reaktionstemperatur von 60 bis 95°C, wobei die Halbwertszeit des Radikalbildners bei der Reaktionstemperatur von 0,1 bis 20 min. beträgt, miteinander umgesetzt werden.

2. Verfahren gemäß Anspruch 1, **dadurch gekennzeichnet, dass** die Reaktionstemperatur 80 bis 95°C ist.

3. Verfahren gemäß wenigstens einem der Ansprüche 1 oder 2, **dadurch gekennzeichnet, dass** die Halbwertszeit des Radikalbildners bei der Reaktionstemperatur 0,5 bis 10 min. beträgt.

4. Verfahren gemäß wenigstens einem der Ansprüche 1 bis 3, **dadurch gekennzeichnet, dass** der Radikalbildner in einer Menge von 0,1 bis 5 Mol-%, insbesondere 0,3 bis 2 Mol-%, bezogen auf Propen eingesetzt wird.

5. Verfahren gemäß wenigstens einem der Ansprüche 1 bis 3, **dadurch gekennzeichnet, dass** tert.-Butylperoxyneodecanoat oder Dilauroylperoxid als Radikalbildner verwendet werden.

6. Verfahren gemäß wenigstens einem der Ansprüche 1 bis 3, **dadurch gekennzeichnet, dass** das molare Verhältnis von Dimethylphosphit zu Propen 1,0:1,0 bis 3,0:1,0, insbesondere 1,1:1,0 bis 2,3:1,0 beträgt.

7. Verfahren gemäß wenigstens einem der Ansprüche 1 bis 3, **dadurch gekennzeichnet, dass** das Dimethylphosphit mit einem Trimethylphosphatgehalt von 0 bis 0,1 Gew.-%, insbesondere 0 bis 0,01 Gew.-% eingesetzt wird.

8. Verfahren wenigstens einem der Ansprüche 1 bis 7, **dadurch gekennzeichnet, dass** die Reaktion bei einem Druck von 150 bis 6.000 mbar (abs.), insbesondere 500 bis 950 mbar (abs.) durchgeführt wird.

## Claims

1. Process for preparing dimethyl propanephosphonate, **characterized in that** dimethyl phosphite is reacted with propene in the presence of a free-radical former at a reaction temperature of 60 to 95°C, the half life of the free-radical former being 0.1 to 20 min at the reaction temperature.

2. Process according to Claim 1, **characterized in that** the reaction temperature is 80 to 95°C.

3. Process according to either of Claims 1 and 2, **characterized in that** the half life of the free-radical former is 0.5 to 10 min at the reaction temperature.

4. Process according to at least one of Claims 1 to 3, **characterized in that** the free-radical former is used in an amount of 0.1 to 5 mol%, in particular 0.3 to 2 mol%, based on propene.

5. Process according to at least one of Claims 1 to 3, **characterized in that** tert-butyl peroxyneodecanoate or dilauroyl peroxide is used as free-radical former.

6. Process according to at least one of Claims 1 to 3, **characterized in that** the molar ration of dimethyl phosphite to propene is 1.0:1.0 to 3.0:1.0, in particular 1.1:1.0 to 2.3:1.0.

7. Process according to at least one of Claims 1 to 3, **characterized in that** dimethyl phosphite having a trimethyl phosphate content of 0 to 0.1% by weight, in particular 0 to 0.01% by weight, is used.

8. Process according to at least one of Claims 1 to 7, **characterized in that** the reaction is carried out at a pressure of 150 to 6000 mbar (absolute), in particular 500 to 950 mbar (absolute).

## Revendications

1. Procédé pour la préparation du propanephosphonate de diméthyle, **caractérisé en ce que** l'on fait réagir le phosphite de diméthyle avec le propène à une température de 60 à 95°C en présence d'un inducteur radicalaire dont la période, à la température de réaction, est de 0,1 à 20 min.

2. Procédé selon revendication 1, **caractérisé en ce que** la température de réaction est de 80 à 95°C.

3. Procédé selon au moins une des revendications 1 ou 2, **caractérisé en ce que** la période de l'inducteur radicalaire à la température de réaction est de 0,5 à 10 min.

4. Procédé selon au moins une des revendications 1 à 3, **caractérisé en ce que** l'inducteur radicalaire est mis en oeuvre en quantité de 0,1 à 5 mol%, plus spécialement de 0,3 à 2 mol%, par rapport au propène.

5. Procédé selon au moins une des revendications 1 à 3, **caractérisé en ce que** l'on utilise en tant qu'inducteur radicalaire le peroxynéodécanoate de tert-butyle ou le peroxyde de dilauroyle.

6. Procédé selon au moins une des revendications 1 à 3, **caractérisé en ce que** le rapport molaire phosphite de diméthyle/propène va de 1,0 : 1,0 à 3,0 : 1,0 et plus spécialement de 1,1 : 1,0 à 2,3 : 1,0.

7. Procédé selon au moins une des revendications 1 à 3, **caractérisé en ce que** l'on met en ooeuvre un phosphite de diméthyle dont la teneur en phosphate de triméthyle est de 0 à 0,1 % en poids et plus spécialement de 0 à 0,01 % en poids.

8. Procédé selon au moins une des revendications 1 à 7, **caractérisé en ce que** la réaction est réalisée sous une pression absolue de 150 à 6 000 mbar, plus spécialement de 500 à 950 mbar.
